Europäisches Patentamt

European Patent Office

Office européen des brevets

(11) Publication number: **0 352 069**
**A2**

# EUROPEAN PATENT APPLICATION

(21) Application number: **89307264.5**

(22) Date of filing: **18.07.89**

(51) Int. Cl.⁵: **C 09 K 21/00**

(30) Priority: **22.07.88 GB 8817547**

(43) Date of publication of application:
**24.01.90 Bulletin 90/04**

(84) Designated Contracting States: **BE DE FR GB SE**

(71) Applicant: **MICROPORE INTERNATIONAL LIMITED**
**Hadzor Hall Hadzor**
**Droitwich Worcestershire WR9 7DJ (GB)**

(72) Inventor: **Hill, Robert Deryck**
**10 Ridge Park Bramhall**
**Stockport Cheshire SK7 2BL (GB)**

(74) Representative: **Coker, David Graeme et al**
**Micropore International Limited Hadzor Hall**
**Hadzor Droitwich Worcestershire WR9 7DJ (GB)**

(54) **Heat absorbent material and heat resistant containers.**

(57) A heat absorbent material is made by dissolving gelatine in hot water together with anti-bacterial and anti-fungal additives; while the mixture is still warm it is used to impregnate a blanket of ceramic fibre. When all the mixture (typically up to 13.5 times the weight of the blanket) has soaked into the blanket and cooled to form a gel, the resulting heat absorbent material is sealed in a water-impermeable plastic jacket.

This material contains more water, and hence can absorb more heat, than a blanket simply soaked with water. The water does not readily drain out of the blanket and is kept evenly distributed throughout the blanket by capillary forces if it is subjected to heat. The material can be readily cut to size and shape, and when sealed in a jacket can be easily handled. It can be used, typically in conjunction with thermal insulation, in heat resistant containers such as safes and in heat resistant partitions.

Fig. 1

## Description

### Heat absorbent material and heat resistant containers

This invention relates to heat absorbent material, and to heat resistant containers and heat absorbent panels incorporating such material.

Heat resistant containers are known in which a layer of insulating material, such as ceramic fibre, is disposed inside a housing and surrounding an inner cavity. The cavity is itself lined with a heat-absorbent material having a very high latent heat of fusion, such as sodium acetate trihydrate or sodium metasilicate, and contains a compartment accessible via a door from the exterior of the container to permit objects to be placed therein for protection against heat or fire. An additional layer of insulation may be located inside the heat absorbent material, as an additional safeguard against excess temperatures inside the compartment. In the event of fire or other source of heat being applied to the exterior of the container, transfer of heat into the container is delayed by the outer layer of insulating material. Heat that does reach the heat absorbent material is absorbed thereby, first in raising it to its melting point and then as it is melted. The high latent heat of fusion of this material ensures that the temperature within it does not exceed its melting temperature for a relatively prolonged period.

As an alternative to providing the outer insulating material and the heat absorbent material as separate layers, the insulating material itself can be chosen to incorporate a liquid with a high latent heat of vaporisation. Thus, for example, the outer insulating layer can be made of gypsum, which being a hydrated material contains water. Upon exposure to heat this water is boiled out, absorbing heat of vaporisation as the water is converted to steam. However, this technique suffers from problems of storing sufficient water in the insulating material to limit the temperature rise in the inner compartment for an adequate period, and of providing a path for release of steam to avoid dangerous pressures. Increasing the amount of water can lead to problems of wetting of other insulation in the container unless a retaining jacket is provided, and such problems can still occur if the jacket is ruptured.

Other problems which can occur include sudden and possibly explosive phase change of water to steam (bumping), and drying out of isolated regions of the water-bearing material, leading to local hot spots of increased heat conduction.

It is an object of this invention to provide a heat absorbent material, for use for example in heat resistant containers and heat absorbent panels, which includes a vaporisable liquid and in which increased quantities of liquid can readily be stored.

According to one aspect of this invention there is provided heat absorbent material characterised by vaporisable liquid held in a viscous matrix restraining the liquid against flow, the liquid-containing matrix being absorbed in a porous substrate.

Material according to this invention has the advantage that it can accommodate a surprisingly large quantity of vaporisable liquid. The liquid is restrained against flow, and therefore will not drain to any significant extent even if a jacket surrounding the heat absorbing means is ruptured. In the event of the material being subjected to heat, steady vaporisation of the liquid is facilitated, thereby avoiding sudden vaporisation or 'bumping'. In addition, liquid will tend to travel through the substrate by capillary action to replace vaporised liquid, thus avoiding premature drying out of isolated areas and the associated development of hot spots.

The vaporisable liquid may be water. The viscous matrix may be a gel, such as gelatine, and the porous material may be a fibrous material made for example of ceramic fibre. Preferably the heat absorbent material is disposed in a jacket substantially impermeable to the liquid and its vapour, thereby forming a self-contained heat absorbent panel. The jacket may be made of plastic, for example a plastic-aluminium-plastic laminate, and may have weak points or rupture panels to permit escape of vaporised liquid.

If the heat absorbent material is gelatinous water absorbed into ceramic fibre porous material, for example, there is significantly less collapse of the porous substrate than is the case with plain water, and indeed the substrate may swell instead of collapsing.

Depending on the quantity of liquid and the volume of adjacent insulation it may be possible to omit any release path for vaporised liquid and simply allow vapour to diffuse into the insulation.

According to another aspect of this invention there is provided a heat resistant container comprising:
a housing;
thermal insulation disposed within the housing and having a cavity therein; and
heat absorbing means disposed within the cavity and having a compartment therein, and comprising heat absorbent material as defined above in relationto the first aspect of this invention.

The container may have an additional layer of insulation material disposed in said compartment.

According to a further aspect of this invention there is provided a method of making a heat absorbent material containing vaporisable liquid, characterised by incorporating a vaporisable liquid in a viscous matrix and impregnating a porous substrate with the liquid-containing matrix.

Heat absorbent material, a heat resistant container and a heat absorbent panel according to this invention will now be described, by way of example, with reference to the accompanying drawings, in which:

Figure 1 is a schematic cutaway view of a heat absorbent panel incorporating the material;

Figure 2 is a schematic sectional view of a heat-resistant safe incorporating the material;

Figure 3 is a schematic sectional view of a partition incorporating a heat absorbent panel.

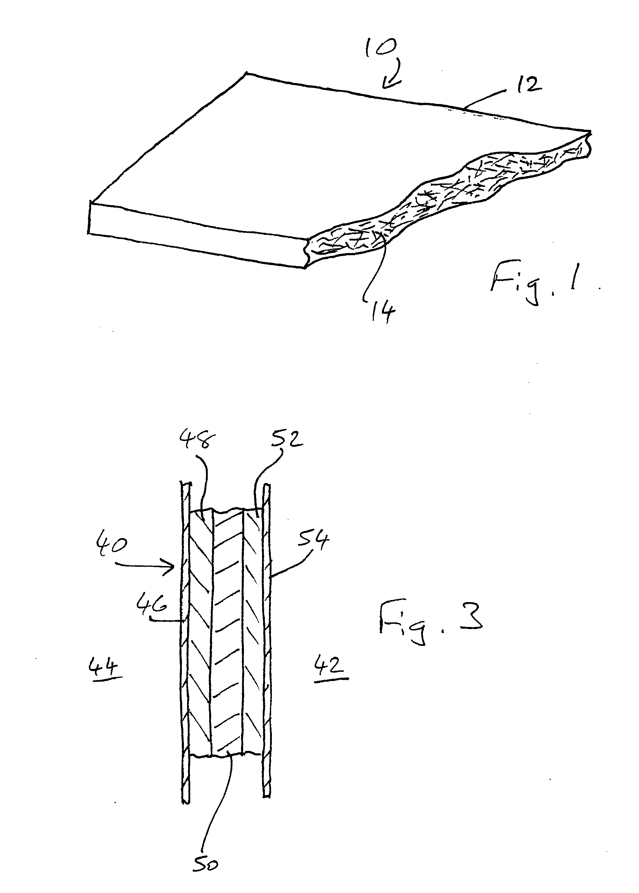

Referring to Figure 1 a heat absorbent panel 10 comprises a jacket 12 containing ceramic fibre blanket 14 impregnated with a mixture of water and gelatine. The jacket 12 is made of a triple laminate plastic, that is two layers of plastic film with an aluminium film between them. This is preferred for its very low permeability to water and water vapour.

The panel 10 is made by first cutting to size a ceramic fibre porous blanket (for example of 1260 degrees C grade fibre), having a density of 64 kg/cubic metre and a thickness of 1/2 inch (12.7 mm). The cut piece or pieces of fibre blanket are then weighed.

A volume of water equal in weight to 13.5 times the weight of the fibre blanket is heated to just below boiling point and the heat removed. Gelatine crystals are gradually stirred in, to an amount of 25 grammes (that is 2-3% by weight) of gelatine per litre of water. The gelatine can be for example of a type that is commercially available for use in the manufacture of photographic emulsions. A material having a higher rather than a lower 'Bloom' measurement (that is, the strength as measured by a Bloom gelometer) is preferred. In this respect a Bloom rating of 260 or above is acceptable, although material with a lower Bloom rating may also be used. Furthermore a grade of gelatine which will produce a cooled solution having a higher viscosity rather than a lower viscosity is preferred.

After the gelatine has all dissolved, commercially available anti-bacterial and anti-fungal agents are added to inhibit bacterial or fungal growth, using the manufacturer's recommended minimum concentration. A detergent may also be added to promote wetting and dispersion through the fibre blanket. The mixture is allowed to cool until it is lukewarm and has become more viscous, but has not started to gel.

The warm mixture is poured into a tray and the cut ceramic fibre blanket placed on the surface of the mixture so that it is drawn up by capillary action into the porous substrate formed by the blanket and completely soaks it. We have found that better results are obtained if the blanket is left undisturbed while this occurs, to avoid reduction in the blanket thickness. Alternatively the mixture may be applied to the surface of the blanket in the form of a gentle spray. Typically we find that most or all of the mixture will be taken up by the blanket. The impregnated blanket is allowed to cool until the liquid has formed a gel.

If desired the blanket can be trimmed to exact size and shape. Thereafter the blanket is enclosed in the jacket 12. This may be done by wrapping the material of the jacket 12 around the blanket, or by placing the blanket in a bag or envelope prepared from that material. In the latter case, handling of the blanket can be aided by sliding a thin relatively rigid sheet of plastic or metal under the blanket to support its weight while it is inserted into the jacket, after which the sheet is withdrawn. Surplus air is exhausted from the jacket 12, and then the jacket is sealed, for example by heat sealing, to minimise or eliminate loss of water at normal temperature and form a self-contained, readily handleable panel.

We have found that the heat absorbent material thus produced can accommodate more water, and therefore absorb more heat, than material made by simply soaking ceramic fibre blanket in water. The blanket sustains less collapse, and may even swell somewhat, and the water does not drain readily from the viscous gelatine matrix. The impregnated blanket is much firmer than water-soaked fibre blanket, and, as indicated, can be readily cut to size and shape.

Enclosing the material in its own impermeable jacket 12 is preferred, since this prevents water loss and makes the material easier to handle. However, it is envisaged that a similar water barrier could instead be provided as an integral part of an article into which the heat absorbent material is to be incorporated soon after manufacture.

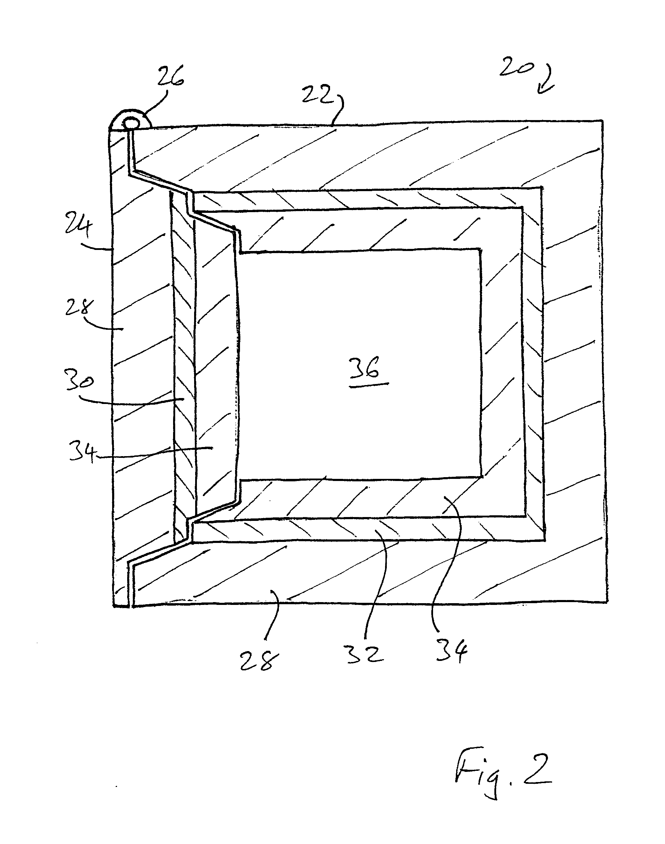

Referring to Figure 2, a heat resistant container 20 has an outer case or housing 22 and a door 24 connected to the housing 22 by a hinge 26. A lock or similar fastening device (not shown) is provided to secure the door in its closed position. Within the housing 22 and the door 24 there is a first, outer layer of thermal insulating material 28 such as ceramic fibre or a high-performance thermal insulation (e.g. that sold under the trade mark MICROTHERM) based on highly-dispersed pyrolytic silica with fibre reinforcement and opacifier.

Enclosed within the outer insulation 28 is a layer of insulation containing gelled water and made as described above. The door 24 contains one panel 30 of this insulation, and the housing 22 contains a hollow box 32 of the water bearing insulation with one face open. This box may be made as a single integral part or may be built up from individual panels.

Within the gelled water insulation 30 and 32 there is a further layer of insulation 34 made of ceramic fibre or pyrolytic-silica based insulation. This insulation 34 encloses a compartment 36 for the storage of items to be protected against heat.

It is preferable for the jackets containing the water bearing insulation 30 and 32 to have weak points or rupture panels incorporated in them. This enables pressure built up as heat is absorbed and the water vaporises to be released. In addition released water will be absorbed by the surrounding insulation 28, for example as it drains to the bottom of the container, and will then be available for re-vaporisation until all the water within the container has been vaporised. Furthermore, it is envisaged that as steam is released from the water-bearing insulation to escape between the door 24 and the housing 22, it will obstruct the passage of radiation through any gaps that may have opened as a result of thermal expansion.

Figure 3 shows a partition 40 for protecting a room 42, for example, from a source of heat 44. The partition 40 has a facing 46 adjacent the heat source 44, and behind the facing 46 is a layer of pyrolytic-silica based thermal insulating material 48. Next to this layer 48 is a panel of water bearing insulation 50 made as described with reference to Figure 1. This is in turn covered with a layer of gypsum plasterboard 52, which is covered with a decorative facing 54. In the event of excessive heat being applied to the partition 40, any steam released by the panel 50 can condense into the plasterboard 52, and thus remain available for additional heat absorption. This process can be assisted if any covering such as paper or cardboard on the face of the plasterboard 52 adjacent the panel 50 is perforated, for example by drilling holes through it, to facilitate movement of water into the plasterboard.

In the arrangement shown in Figure 3 it is preferable for the insulating material 48 to be treated to render it hydrophobic as a precaution against water leakage from the panel 50. Alternatively an additional layer, for example of mineral wool or plasterboard, can be inserted between the layer 48 and the panel 50 to absorb water in the same manner as the layer 52.

## Claims

1. Heat absorbent material characterised by vaporisable liquid held in a viscous matrix restraining the liquid against flow, the liquid-containing matrix being absorbed in a porous substrate (14).

2. The heat absorbent material of claim 1, characterised in that the vaporisable liquid is water.

3. The heat absorbent material of claim 1 or claim 2, characterised in that the viscous matrix is a gel, for example gelatine.

4. The heat absorbent material of any one of the preceding claims, characterised in that the porous substrate (14) is fibrous, for example of ceramic fibre.

5. The heat absorbent material of any one of the preceding claims, disposed in a jacket (12) substantially impermeable to the liquid and its vapour.

6. The heat absorbent material of claim 5, characterised in that the jacket (12) is made of plastic, for example a plastic-aluminium-plastic laminate.

7. The heat absorbent material of claim 5 or 6, characterised in that the jacket (12) has weak points or rupture panels to permit escape of vaporised liquid.

8. A heat resistant container comprising:
a housing (22);
thermal insulation (28) disposed within the housing and having a cavity therein; and
heat absorbing means (32) disposed within the cavity and having a compartment (36) therein, and comprising heat absorbent material according to any one of the preceding claims.

9. The container of claim 8, characterised in that an additional layer of insulation material (34) is disposed in said compartment.

10. A method of making a heat absorbent material containing vaporisable liquid, characterised by incorporating a vaporisable liquid in a viscous matrix and impregnating a porous substrate (14) with the liquid-containing matrix.

Fig. 1.

Fig. 3

Fig. 2